# EUROPÄISCHE PATENTSCHRIFT

(11) **EP 3 356 074 B1**
(45) Veröffentlichungstag und Bekanntmachung des Hinweises auf die Patenterteilung: **04.12.2019**
(21) Anmeldenummer: 15778862.1
(22) Anmeldetag: 01.10.2015
(51) Int. Cl.: B23F 23/12, B23F 19/05, B23Q 11/08

(54) **VERZAHNUNGSBEARBEITUNGSMASCHINE MIT BALG**
TOOTHING PROCESSING MACHINE HAVING BELLOWS
MACHINE D'USINAGE DE DENTURES COMPRENANT UN SOUFFLET

(43) Veröffentlichungstag der Anmeldung: 08.08.2018
(73) Patentinhaber: Gleason Switzerland AG, 2557 Studen (CH)
(72) Erfinder: HUNZIKER, Raphaël, 4852 Rothrist (CH); LANG, Severin, 3426 Aefligen (CH); FLURY, Christoph, 3297 Leuzigen (CH)
(74) Vertreter: Leinweber & Zimmermann
(86) Internationale Anmeldenummer: PCT/CH2015/000147
(87) Internationale Veröffentlichungsnummer: WO 2017/054096

(56) Entgegenhaltungen:
- WO-A1-2015/021566
- DE-U1- 9 113 368
- US-A- 3 824 890

## Beschreibung

### Technisches Gebiet

Die Erfindung betrifft eine Verzahnungsbearbeitungsmaschine, insbesondere eine Verzahnungshartfeinbearbeitungsmaschine. Sie umfasst ein Maschinengestell und einen Spindelschlitten mit einer ersten Spindel. Die Spindel umfasst ein erstes Spindelgehäuse und eine erste Spindelwelle. Die erste Spindelwelle ist hierbei im ersten Spindelgehäuse um eine erste Spindelachse drehbar angeordnet und weist ein freies Ende zur Aufnahme eines Werkstücks oder eines Werkzeugs auf. Die Maschine umfasst ferner eine zweite Spindel mit einem zweiten Spindelgehäuse und einer zweiten Spindelwelle, wobei die zweite Spindelwelle im zweiten Spindelgehäuse um eine zweite Spindelachse drehbar zur Aufnahme eines Werkzeugs oder Werkstücks angeordnet ist. Dabei bildet mindestens eine Wandung des Maschinengestells einen Teil der Hülle eines abschliessbaren Arbeitsraums, in welchem das Werkstück bearbeitbar ist und welcher abgeschlossen werden kann, um den Austritt eines Materialabtrags, einer Bearbeitungsflüssigkeit und/oder eines Bearbeitungsnebels aus dem Arbeitsraum in andere Maschinenbereiche oder nach aussen zu verhindern. Der Spindelschlitten ist dabei am Maschinengestell in Richtung der ersten Spindelachse verschiebbar angeordnet. Zudem schliesst der abschliessbare Arbeitsraum das freie Ende der ersten Spindelwelle und mindestens abschnittsweise die zweite Spindelwelle ein.

### Stand der Technik

Derartige Verzahnungsbearbeitungsmaschinen sind bekannt. Sie werden vor allem für die abtragende Bearbeitung von vorverzahnten Präzisionszahnrädern für Getriebe aller Art eingesetzt, im Besonderen jedoch für Fahrzeuggetriebe. In den meisten abtragenden Bearbeitungsverfahren wird zur Unterstützung des Bearbeitungsprozesses eine Öl- oder wasserbasierte Bearbeitungsflüssigkeit benötigt. Der während der Bearbeitung anfallende Werkstückmaterialabtrag und Werkzeugabrieb vermengt sich mit der Bearbeitungsflüssigkeit zu einem Bearbeitungsschlamm, der sich auf Maschinenteilen absetzen kann. Zudem fällt bei Verzahnungsmaschinen, welche mit abrichtbaren Werkzeugen arbeiten, während des Abrichtens des abrichtbaren Werkzeuges Werkzeugmaterialabtrag an, welcher anteilsmässig viele abrasive Partikel umfasst zuzüglich des Abriebs des Abrichtwerkzeugs durch Verschleiss desselben. Sowohl der Werkzeugmaterialabtrag wie auch der Abrieb des Abrichtwerkzeugs vermengen sich ebenfalls mit dem Bearbeitungsschlamm. In vielen Fällen, insbesondere bei Hochgeschwindigkeitsprozessen, bei welchen die Bearbeitungsflüssigkeit unter hohem Druck in den Bearbeitungsbereich eingesprüht wird, entsteht ein Bearbeitungsnebel. Die Bearbeitungsflüssigkeit, der Bearbeitungsnebel und damit der Bearbeitungsschlamm verbreiten sich dadurch im kompletten Maschinengehäuse. Deshalb müssen nicht nur die einzelnen Maschinenkomponenten zum Teil aufwendig abgedichtet werden, sondern auch grosse Aufwendungen getrieben werden, damit die auf Werkstücken und Maschinenkomponenten abgelagerte Flüssigkeit bei einem Teilewechsel nicht aus der Maschine gelangt. Zusätzlich werden grosse und leistungsfähige Absauganlagen zur Absaugung des Bearbeitungsnebels benötigt. Dabei ist es insbesondere schwierig, den Arbeitsraum zwischen den beweglichen Teilen der Maschine und dem Maschinengestell abzudichten.

Die WO 2015/021566 A1 (MDC Max Daetwyler AG) zeigt eine Zahnradhonmaschine, mit einer vertikal, mit einem freien Ende nach oben und entlang ihrer Spindelachse verschiebbaren ersten Werkstückspindel und einer zweiten Werkzeugspindel, welche beide an einem zylindrischen Maschinengestell angeordnet und von diesem mantelförmig umgeben sind. Das nach oben und unten abgeschlossene Maschinengestell bildet dabei eine Hülle, welche den Arbeitsraum umschliesst und die das Austreten von Schmierstoffen und Spänen verhindert. Dabei ist im unteren Bereich der Maschine oberhalb eines Bodens eine Stahlplatte im Mantel befestigt, um Schmierstoffe und Späne aufzunehmen. Die Maschine ermöglicht ein einfaches Abschliessen der Maschine gegen den Austritt von Schmierstoffen und Spänen, jedoch können weiterhin Schmierstoffe und Späne in den unteren Bereich der Maschine gelangen und vor allem die Vorschubachse der Werkstückspindel verschmutzen.

Die DE 10 2011 082 869 B4 (Felsomat) zeigt eine weitere Maschine zum Honen von Zahnrädern. Die Maschine ist mit einer geschlossenen Arbeitswanne ausgestattet, die eine Werkzeugspindel komplett umgibt und auf der Oberseite eine Blende mit einer Ausnehmung aufweist. Durch diese Blende ist eine Werkstückspindel einführbar, deren Spindelhals beim Einführen die Ausnehmung öldicht umschliesst. Da die Blende zudem radial zur Werkstückspindel verschiebbar öldicht gelagert ist, wird die Blende bei Zustellbewegungen der Werkstückspindel mitgenommen. Durch diese Anordnung wird die Ausbreitung eines Ölnebels auf den kleinen Bereich der Arbeitswanne beschränkt. Nur das vordere Ende der Werkstückspindel ist der Bearbeitungsflüssigkeit ausgesetzt, nicht jedoch der hintere Teil mit den Messsystemen und den Kabelanschlüssen. Ebenso sind auch sämtliche Vorschubachsen der Maschine von dem Ölnebel abgeschirmt.

Diese Anordnung ist nur für Maschinen geeignet, deren Werkstückspindel direkt oberhalb der Aussparung angeordnet ist. Durch die Anordnung der Werkstückspindel oberhalb des Arbeitsraumes wird die Maschine aufwendig. Die Wellendichtung der Blende unterliegt durch die vertikale Gleitbewegung einem ständigen Verschleiss, der über die Zeit die Dichtigkeit der Gummilippen beeinträchtigt. Insbesondere führen längere Standzeiten zur Bildung von wulstartigen Bearbeitungsschlammablagerungen. Die abrasiven Partikel dieser Ablagerungen führen beim Wiederaufnehmen der Fertigung zu einer grossen Abnutzung der Gummilippen oder sogar zu deren Zerstörung.

Die bekannten Maschinen haben zumeist einen aufwendigen Aufbau oder sind sonst, wenig servicefreundlich und teuer im Unterhalt.

### Darstellung der Erfindung

Die Aufgabe der Erfindung ist es, eine dem eingangs genannten technischen Gebiet zugehörige Maschine zu schaffen, welche bei einem platzsparenden und kostengünstigen Aufbau servicefreundlich und kostengünstig im Unterhalt ist.

Die Lösung der Aufgabe ist durch die Merkmale des Anspruchs 1 definiert. Gemäss der Erfindung umfasst die Verzahnungsbearbeitungsmaschine einen Balg, der auf einer ersten Seite fest mit dem Spindelschlitten und auf einer zweiten Seite fest mit der mindestens einen Wandung des Maschinengestells verbunden ist, wobei der Balg den abschliessbaren Arbeitsraum an mindestens einer Stelle so begrenzt, dass ein Teil des Spindelschlittens permanent ausserhalb des Arbeitsraums liegt. Hierbei ist der Balg in der Lage, durch ein Ausziehen und Zusammenziehen eine relative Bewegung in Richtung der ersten Spindelachse zwischen dem Spindelschlitten und dem Maschinengestell aufzunehmen.

Durch den Balg wird eine preisgünstige Abdichtung des Arbeitsraums zwischen dem Maschinengestell und dem Spindelschlitten ermöglicht, die zuverlässig und gleichzeitig dicht ist. Dabei ist dieses Abdichtsystem sehr robust, da es keine zueinander bewegten Schnittstellen umfasst, die eine abdichtende Funktion haben und einem Verschleiss unterliegen und damit anfällig gegenüber Ablagerungen sind. Durch das Abschliessen des Arbeitsraums zwischen dem Spindelschlitten und dem Maschinengestell ist es möglich, den Teil der Maschine, welche dem Schmutz ausgesetzt ist, sehr klein zu halten. Insbesondere können für den Spindelschlitten vorgesehene Antriebsmittel und auch etwaige Anschlüsse und Messsysteme eines Antriebs für die erste Spindelwelle ausserhalb des Arbeitsraums angeordnet werden und somit vor der Bearbeitungsflüssigkeit und dem Bearbeitungsnebel geschützt werden. Dadurch sind weder spezielle Abdichtungsmassnahmen für die Vorschubachsen, die Führungen der Vorschubachsen noch für etwaige sich an der Rückseite der ersten Spindelwelle befindliche Messsysteme notwendig, da diese ausserhalb des Arbeitsraums angebracht werden können. Zudem kann eine allfällige Absauganlage für den Bearbeitungsnebel kleiner dimensioniert werden, da aufgrund eines kleineren, dem Bearbeitungsnebel ausgesetzten Raumvolumens eine kleinere Absaugleistung erforderlich wird.

Im Rahmen dieser Anmeldung werden auch die Aussenkonturen von fest mit dem Maschinengestell verbundenen Komponenten, wie beispielsweise Abdeckbleche und sonstige Maschinenverkleidungen, als Wandungen des Maschinengestells definiert.

Vorzugsweise sind das Spindelgehäuse und die erste Spindelwelle in einer mechanischen Einheit verbaut, die an einer Schnittstelle des Spindelschlittens befestigt werden kann. Jedoch kann die Spindelwelle direkt im Spindelschlitten gelagert sein und somit das Spindelgehäuse integraler Bestandteil des Spindelschlittens sein.

Im Rahmen dieser Erfindung wird unter einer Spindel auch eine positionsgeregelte Drehachse verstanden (C-Achse). Im Rahmen dieser Erfindung sollen auch Maschinen unter den Begriff Verzahnungsbearbeitungsmaschine fallen, welche neben anderen Bearbeitungsprozessen in der Lage sind, einen Verzahnungsbearbeitungsprozess auszuführen, also auch sogenannte Kombi-Maschinen.

Unter dem Begriff Materialabtrag ist der bei der Bearbeitung anfallende Abtrag am Werkstück, beispielsweise in Form von Spänen, der Materialabtrag am Werkzeug durch Verschleiss oder der Abtrag am Werkzeug bei einem Abtrichtprozess sowie der Verschleiss eines Abrichtwerkzeuges zu verstehen.

Zu den Verzahnungshartfeinbearbeitungsmaschinen gehören Verzahnungsbearbeitungsmaschinen, welche die Bearbeitung von gehärteten oder vergüteten Verzahnungsoberflächen über ein Hartfeinbearbeitungsverfahren erlauben, wie beispielsweise Schleifen, Honen und Hartschälen.

Bevorzugter Weise ist der Balg ein Faltenbalg. Die Verwendung eines Faltenbalgs ermöglicht es, eine grosse relative Bewegung zwischen der ersten Spindelachse und dem Maschinengestell aufzunehmen und dabei die Rückstellkräfte klein zu halten. Je nach Verfahrweg und Platzverhältnissen kann es jedoch auch vorteilhaft sein, einen einfachen Balg zu verwenden, der einfacher aufgebaut und kostengünstiger herzustellen ist.

Mit Vorteil weist der Balg auf der ersten Seite eine erste Öffnung und auf der zweiten Seite eine zweite Öffnung auf und dazwischen eine über einen Umfang geschlossene Mantelfläche. Dabei ist der Balg im Bereich einer Kontur der ersten Öffnung mit dem Spindelschlitten und im Bereich einer Kontur der zweiten Öffnung mit mindestens einer Wandung des Maschinengestells verbunden. Hierbei umschliessen die beiden Konturen jeweils die erste Spindelachse.

Diese Anordnung ermöglicht eine besonders günstige und zuverlässige Abdichtung zwischen der Wandung des Maschinengestells und dem Spindelgehäuse.

In einer alternativen Ausführungsform deckt der Balg nur einen Teil eines Umfangs des Spindelschlittens um die erste Spindelachse ab. Dies kann beispielsweise vorteilhaft sein, wenn im Bereich einer Aussenfläche des Spindelschlittens zwischen dem Spindelschlitten und dem Maschinengestell weniger Platz vorhanden ist und nicht genug Einbauraum zur Verfügung steht. In diesem Bereich kann beispielsweise zur Abdichtung zwischen dem Spindelschlitten und einer weiteren Wandung des Maschinengestells ein anderes Dichtungssystem wie beispielsweise eine Dichtungslippe oder eine Lamellendichtung angebracht sein und somit die Dichtung im Bereich des Umfangs ergänzen, welcher nicht vom Balg abgedeckt wird.

Eine Mantelfläche ist auch dann als geschlossen zu betrachten, wenn der Balg über dem Umfang eine Nahtstelle aufweist, die den Faltenbalg über den Umfang schliesst. Die Nahtstelle kann dabei auf unterschiedlichste Weise verschlossen sein, wie beispielsweise durch eine nichtlösbare Verbindung wie Verschweissen, Verkleben, Vernieten oder aber auch durch eine lösbare Verbindung wie Verschrauben, Klemmen oder eine Kombination wie beispielsweise in Form einer Schraubringverbindung.

Bevorzugter Weise ist die erste Spindelachse im Wesentlichen vertikal ausgerichtet und das freie Ende der ersten Spindelwelle nach oben gerichtet. Diese Ausführungsform ermöglicht eine besonders kompakte und steife Bauweise der Maschine. Diese Bauweise ermöglicht es vor allem, eine steife Lagerung der ersten Spindelwelle zu realisieren, da die Grösse der Spindel und das Gewicht in der Position im unteren Bereich eine kleinere Rolle spielen. Zudem kann das Maschinengestell im unteren Bereich, in welchem die erste Spindel mit ihrem ersten Spindelgehäuse angeordnet ist, stabiler ausgelegt werden, als in einem oberen Bereich des Maschinengestells. Die Steifigkeit der Spindelwellen und deren Lagerungen sind für Werkstück- oder Werkzeugspindeln einer Verzahnungsbearbeitungsmaschine von eminenter Wichtigkeit, da dadurch höhere Bearbeitungsgeschwindigkeiten erreicht werden können. Zusätzlich ermöglicht die vertikale Anordnung der ersten Spindel mit dem freien Ende der Spindelwelle nach oben eine einfache Be- und Entladung der Maschine mit Werkstücken oder Werkzeugen von oben, beispielsweise über einen Portallader.

Alternativ kann die erste Spindel jedoch auch oben angeordnet sein, so dass das freie Ende der ersten Spindel nach unten gerichtet ist. Die Be- und Entladung erfolgt dann beispielsweise seitlich oder von unten. Die erste Spindel kann jedoch auch horizontal auf einem Horizontalschlitten angeordnet werden und ebenfalls von oben be- und entladen werden. Jedoch ist dann in vielen Fällen für das Be- und Entladen eine zusätzliche Schwenkachse notwendig. Es sind jedoch auch Varianten möglich, in welchen die erste Spindel schräg angeordnet ist, insbesondere bei Schrägbettmaschinen.

Vorzugsweise ist der Arbeitsraum dicht gegen den Austritt von Bearbeitungsflüssigkeit oder Bearbeitungsnebel abschliessbar. Es kann also im abgeschlossenen Zustand keine Bearbeitungsflüssigkeit den abgeschlossenen Bearbeitungsraum auf direktem Weg ausser aus dafür vorgesehenen Abflusskanälen oder Absaugvorrichtungen verlassen. Es wird insbesondere vorausgesetzt, dass der Arbeitsraum auch dicht gegenüber Bearbeitungsflüssigkeiten geringer Viskosität ist, wie sie als Kühlschmierstoff bei Feinbearbeitungsverfahren eingesetzt werden.

Das setzt voraus, dass der Balg den Bereich zwischen der Wandung des Maschinengestells und dem Spindelschlitten gegen einen Austritt der Bearbeitungsflüssigkeit und des Bearbeitungsnebels abdichtet. Die Dichtung wirkt daher nicht nur als Spritzschutz, sondern auch als Abdichtung. Das verlangt, dass sowohl die den Balg bildende Fläche sowie die Bereiche zwischen dem Balg und dem ersten Spindelgehäuse und zwischen dem Balg und der mindestens einen Maschinenwandung dicht sind. Bei einem Balg mit einer geschlossenen Mantelfläche müssen daher die Mantelfläche des Balges und der Bereich der Kontur der ersten Öffnung, in welchem der Balg mit dem Spindelschlitten verbunden ist, und der Bereich der Kontur der zweiten Öffnung, in welchem der Balg mit der mindestens einen Wandung des Maschinengestells verbunden ist, dicht sein.

Dadurch kann eine zusätzliche Abdichtung der Maschinenelemente ausserhalb des Arbeitsraumes vermieden werden.

In manchen Fällen kann es jedoch auch ausreichend sein, dass der Balg nicht 100 % dicht gegenüber der Bearbeitungsflüssigkeit ist, sondern vorwiegend als Spritzschutz dient. Dies ist insbesondere der Fall, wenn die erste Spindel mit dem freien Ende nach unten ausgerichtet ist und/oder wenn kein Bearbeitungsnebel auftritt. In einem solchen Fall kann insbesondere eine teilweise Durchlässigkeit des Balgs an den Schnittstellen tolerierbar sein. Gegebenfalls kann in den Bereichen zwischen dem Balg und dem ersten Spindelgehäuse bzw. dem Balg und der mindestens einen Wandung des Maschinengestells noch eine zusätzliche Abtropfwanne vorgesehen werden.

In einer weiteren besonderen Ausführungsform ist die zweite Spindelwelle als Hohlwelle zur Aufnahme eines ringförmigen Werkzeugs oder eines ringförmigen Werkstücks ausgebildet. Eine solche Spindelwelle ist besonders geeignet für Verzahnungshonmaschinen zur Aufnahme von innenverzahnten Honringen oder von innenverzahnten Werkstücken. Sie ermöglicht es, das Werkstück oder Werkzeug auf dem freien Ende der ersten Spindel durch die Hohlwelle der zweiten Spindelwelle und durch das ringförmige Werkzeug oder Werkstück hindurch zu be- und entladen, weshalb die Achsen der Maschine, insbesondere aber die zweite Spindel für den Werkstück- oder Werkzeugwechsel nur unwesentlich bewegt werden müssen. Dies ist nicht nur vorteilhaft für die Werkstück- oder Werkzeugwechselzeit, sondern ermöglicht es, die Achsen für kurze Hübe auszulegen, womit die Maschine kompakter, steifer und kostengünstiger gebaut werden kann. Hierbei sei unter einer Hohlwelle eine Spindelwelle verstanden, welche im montierten Zustand, also inklusive Spannmittel, eine durchgehende Öffnung entlang ihrer Drehachse aufweist.

In einer besonderen Ausführungsform ist die Spindelwelle topfförmig ausgeführt. Die zweite Spindelwelle hat dann an einem Ende einen vergrösserten Innendurchmesser zur Aufnahme eines ringförmigen Werkzeugs oder eines ringförmigen Werkstücks. Am anderen Ende kann die Spindelwelle entweder geschlossen sein, oder auch hohlzylindrisch ausgebildet sein, jedoch mit einem kleineren Durchmesser. Diese Bauweise ermöglicht die Verwendung von kleineren Lagerdurchmessern und Motoren mit kleineren Luftspalten, wodurch sich Spindeln mit höheren Drehzahlen realisieren lassen, die insbesondere für das Innenhonen vorteilhaft sind, bei welchem ein innenverzahntes Werkstück in der zweiten Spindelwelle eingespannt wird.

In einer alternativen Ausführungsform umfasst die zweite Spindel jedoch ein freies Ende zum Spannen eines Werkzeugs oder eines Werkstücks. An dem freien Ende ist dann vorzugsweise ein Spannmittel zum Fixieren des Werkstücks an der Spindelwelle angebracht. Diese Ausführungsform ist insbesondere für Verzahnungsbearbeitungsmaschinen, welche mit aussenverzahnten Werkzeugen arbeiten, vorteilhaft, wie beispielsweise Honmaschinen mit aussenprofilierten Werkzeugen, Schabmaschinen sowie Wälzschleifmaschinen.

Besonders bevorzugt ist die Verzahnungsbearbeitungsmaschine eine Verzahnungshonmaschine. Zum Honen von Aussenverzahnungen lässt sich auf das freie Ende der ersten Spindel das zu bearbeitende Werkstück und auf der zweiten Spindelwelle ein verzahntes Honwerkzeug (abrasives Werkzeug) einspannen. Besonders bevorzugt ist eine Honmaschine, bei welchem auf der zweiten Spindelwelle ein innenverzahntes (abrasives) Honwerkzeug eingespannt werden kann. Zum Honen von Innenverzahnungen lässt sich auf der zweiten Spindelwelle das zu bearbeitende Werkstück und im Gegenzug auf der ersten Spindelwelle das (aussen profilierte) Honwerkzeug (abrasives Zahnrad) einspannen.

Alternativ kann die Verzahnungsbearbeitungsmaschine aber auch eine andere Verzahnungsbearbeitungsmaschine sein, welche in der Lage ist, vorverzahnte Werkstücke zu bearbeiten oder mindestens einen Arbeitsschritt umfasst, in welchem eine Verzahnung eines vorverzahnten Werkstücks bearbeitet wird. Als Beispiele für solche Verzahnungsbearbeitungsmaschinen seien Verzahnungsschleifmaschinen, sowohl Wälzals auch Profilschleifmaschinen, Weich- und Hartschabmaschinen, Verzahnungsentgratmaschinen und auch Hartschälmaschinen genannt.

Mit Vorteil ist das zweite Spindelgehäuse senkrecht zur ersten und zur zweiten Spindelachse um eine Schwenkachse schwenkbar am Maschinengestell gelagert, vorzugsweise an zwei diametral gegenüberliegenden Lagerstellen.

Dadurch, dass die zweite Spindel am Maschinengestell schwenkbar gelagert ist, kann eine sehr hohe Steifigkeit erzielt werden. Dies gilt insbesondere bei einer Anordnung mit zwei diametral gegenüberliegenden Lagerstellen. Entstehende Beschleunigungskräfte der zweiten Spindel oder auch Reaktionskräfte aus dem Bearbeitungsprozess können direkt in das Maschinengestell abgeleitet werden. Es ist jedoch auch möglich, dass die zweite Spindel auf einer anderen Achse, welche kinematisch zwischen dem Maschinengestell und der zweiten Spindel angeordnet ist, gelagert ist. Dadurch können zusätzliche Bewegungsfreiheitsgrade realisiert werden.

In einer anderen bevorzugten Ausführungsform ist das zweite Spindelgehäuse zusätzlich entlang einer linearen Achse, die mit der Schwenkachse zusammenfällt, verschiebbar am Maschinengestell gelagert. Die Lagerung ermöglicht folglich eine lineare Bewegung entlang der Schwenkachse und eine Schwenkbewegung um die Schwenkachse. Durch diese Lagerung mit zwei Freiheitsgraden ist eine besonders kompakte und steife Lagerung des zweiten Spindelgehäuses möglich. Insbesondere fallen weniger Komponenten an. Es ist auch einfacher, die Antriebseinheiten der Schwenk- und der linearen Achse ausserhalb des Arbeitsraums zu platzieren und den Arbeitsraum kompakter zu gestalten. Diese Lagerung ist vorzugsweise als Gleitlager ausgeführt. Es können jedoch auch Wälzlager, beispielsweise Kugelkäfige, oder hydrostatische Lager für eine solche Lagerung eingesetzt werden.

Mit Vorteil schliesst der abschliessbare Arbeitsraum die zweite Spindelwelle ganz ein. Dadurch wird die Abdichtung des Arbeitsraums weiter vereinfacht, insbesondere wenn auch das zweite Spindelgehäuse im Wesentlichen innerhalb des Arbeitsraums angeordnet wird. Unter "im Wesentlichen" wird verstanden, dass Verlängerungen des zweiten Spindelgehäuses zum Verbinden der zweiten Spindel mit anderen Achsen oder auch zu Lagerstellen mit anderen Achsen oder zum Maschinengestell mindestens teilweise ausserhalb des abschliessbaren Arbeitsraums liegen können.

Es ist bevorzugt, dass die Mantelfläche des Balgs einen kreisrunden Querschnitt besitzt und vorzugsweise eine zylindrische Grundform hat. Mit Vorteil haben auch die Wandung des Maschinengestells, mit welcher der Balg verbunden ist, und das Spindelgehäuse im Bereich, in der der Balg befestigt ist, eine kreisrunde Form. Ein Balg mit einem kreisrunden Querschnitt lässt sich besonders einfach fertigen und ist besonders langlebig.

Vorzugsweise ist der Balg aus einem Elastomer, insbesondere aus Gummi hergestellt. Dies ermöglicht eine besonders einfache Abdichtung zwischen der mindestens einen Wandung des Maschinengestells und dem Balg respektive zwischen dem ersten Spindelgehäuse und dem Balg. Der Balg ist auch sehr einfach und kostengünstig herzustellen. Da er einstückig realisierbar ist, ist er zudem sehr robust und langlebig. Ein besonders gut geeignetes Elastomer für den Balg stellt Acrylnitril-Butadien-Kautschuk (NBR) dar, welcher sich durch eine besondere Quellbeständigkeit gegenüber Mineralölen, eine gute Elastizität und hohe Druckverformungsresistenz auszeichnet. Je nach Beschaffenheit der Bearbeitungsflüssigkeit können auch Elastomere aus Naturkautschuk oder auch andere synthetische Kautschukarten wie Acrylatkautschuke (ACM) vorteilhaft für die Herstellung des Balgs verwendet werden.

Anstelle von Elastomeren können jedoch auch andere Materialien verwendet werden, welche elastisch verformbar sind. Beispielsweise können metallische Bälge verwendet werden, die aus einzelnen metallischen Lamellen zusammengeschweisst sind.

Vorzugsweise gehört der vom Balg umschlossene Raum zum Arbeitsraum. Dadurch wird erreicht, dass der Balg seine kleinste Dehnung in der Position hat, in welcher die erste Spindel am weitesten in den Arbeitsraum hineinreicht. Da typischerweise die Arbeitsposition in der Nähe der Position ist, in welcher die erste Spindel am weitesten in den Arbeitsraum hineinragt und in welcher sie sich in einem grösseren Zeitanteil befindet, wird der Zeitanteil in welcher der Balg durch grosse Dehnung belastet ist, reduziert. Ausserdem wird durch diese Anordnung das Volumen des Arbeitsraums noch einmal verringert.

Alternativ liegt der Arbeitsraum ausserhalb des vom Balg umschlossenen Raums, so dass der Balg einen Bereich zwischen dem Maschinengestell und dem Spindelgehäuse vom Arbeitsraum abtrennt und der Arbeitsraum durch den Balg verringert wird. In diesem Fall ist die Dehnung des Balgs am grössten, wenn die erste Spindel am weitesten in den Arbeitsraum hineinragt.

In einer bevorzugten Ausführungsform umfasst der Spindelschlitten einen ringförmigen Flansch, welcher über einen Umfang im Bereich der ersten Öffnung mit dem Balg flüssigkeitsdicht verbunden ist. Durch den Flansch wird eine besonders einfache Ankopplung des Balgs an den Spindelschlitten ermöglicht. Der ringförmige Flansch ist dabei vorzugsweise in den Spindelschlitten integriert. Ganz besonders eignet sich ein gegossener Spindelschlitten, beispielsweise aus Grau-, Stahl- oder Mineralguss, zur Integration des ringförmigen Flanschs, da dadurch kaum Mehrkosten bei der Fertigung entstehen. Der Flansch besitzt für die Verbindung mit dem Balg vorteilhafterweise eine flache, zur ersten Spindelachse senkrecht ausgerichtete Oberfläche.

Ebenso besitzt die Wandung des Maschinengestells bevorzugt eine ringförmige Flanschfläche, welche über einen Umfang im Bereich der Kontur der zweiten Öffnung mit dem Balg verbunden ist.

Dabei ist die Flanschfläche vorzugsweise zu der Seite ausgerichtet, welche von der zweiten Öffnung des Balgs weg zeigt. Diese Anordnung ist dann von Vorteil, wenn das freie Ende der ersten Spindel nach oben ausgerichtet ist, da dann der Balg einen möglichen Verbindungsspalt zwischen der Flanschfläche und dem Balg abdeckt, so dass ein zusätzlicher Spritzschutz vor Austreten der Bearbeitungsflüssigkeit gewährleistet ist.

Dabei definiert der Flansch in bevorzugter Weise eine ringförmige Wanne mit mindestens einer Abflussöffnung, durch welche die Bearbeitungsflüssigkeit mit dem Materialabtrag aus dem Arbeitsraum ablaufen kann. Die Bearbeitungsflüssigkeit mit dem Materialabtrag kann sich in der Wanne sammeln und ablaufen. Die Wanne ist bevorzugter Weise so ausgeführt, dass sie eine Rinne aufweist, die zur Ablauföffnung hin mit einer negativen Steigung zugeführt ist, so dass sich die Bearbeitungsflüssigkeit mit dem Materialabtrag an keiner Stelle ansammeln kann und in die Abflussöffnung fliesst.

Insbesondere ist das Maschinengestell derart ausgebildet, dass der Arbeitsraum für den Betrieb der Maschine durch einen Deckel nach oben abschliessbar ist. Dadurch eignet sich die Verzahnungsbearbeitungsmaschine besonders gut zum Be- und Entladen von oben, sowohl manuell als auch automatisiert. Ein Deckel ist im Vergleich zu einer seitlichen Türe auch mechanisch einfacher realisierbar, da er keine statische Funktion haben muss.

Mit Vorteil ist der Spindelschlitten an eine Kugelumlaufspindel gekoppelt, wobei die Kugelumlaufspindel am Maschinengestell abgestützt ist. Dadurch ergibt sich eine besonders präzise und einfache Antriebsmöglichkeit für die erste Spindel in Richtung ihrer Spindelachse. Die Ankopplung an eine Kugelumlaufspindel, welche am Maschinengestell abgestützt ist, ermöglicht einen sehr steifen Antrieb. Da die Verfahrwege infolge des Balgs in der Regel sehr klein sind, kann auch eine kurze Kugelumlaufspindel eingesetzt werden. Besonders bevorzugt ist die Spindelmutter der Kugelumlaufspindel an dem Spindelschlitten angeordnet.

Alternativ können jedoch auch andere Antriebe zur Erzeugung der Vertikalbewegung verwenden werden, wie beispielsweise ein Direktantrieb (Linearmotor), ein Riemenantrieb oder auch ein Zahnstangenantrieb.

Bevorzugt ist der Balg derart ausgelegt, dass er in der Lage ist, permanent um eine Arbeitsposition herum Pendelhubbewegungen während der Bearbeitung im Bereich bis zu etwa +/- 10 mm, vorzugsweise bis zu etwa +/- 5 mm aufzunehmen, wobei die Arbeitsposition maximal 50 mm von einer Neutralposition des Balgs entfernt ist. Für einen Werkstückwechsel kann der Balg jedoch von der Neutralposition zwischen 0 - 300 mm in eine Wechselposition, bevorzugterweise zwischen 0 - 200 mm ausgedehnt werden.

Unter der Neutralposition ist diejenige Position der ersten Spindel in Richtung der Spindelachse in Bezug auf das Maschinengestell zu verstehen, in welcher der Balg im Neuzustand keine Rückstellkräfte ausübt bzw. nicht belastet ist.

Dadurch, dass der Betrieb im Wesentlichen in der Nähe eines Neutralbereichs erfolgt, kann der Balg mit einem geringen Verschleiss betrieben und somit eine grosse Lebensdauer erzielt werden. Gleichzeitig ist aber auch eine grosse Dehnung oder Kontraktion für einen Werkstück- oder Werkzeugwechsel möglich.

Besonders bevorzugt sind die Spindeln Motorspindeln. Motorspindeln sind besonders geeignet für den Einsatz in Verzahnungsbearbeitungsmaschinen. Motorspindeln ermöglichen durch die direkte Kopplung zwischen Antrieb und Spindelwelle eine sehr genaue Bearbeitung bei gleichzeitig hoher Drehzahl. Durch den Einsatz genauer und hochauflösender Winkelmesssysteme in Verbindung mit einer torsionssteifen Spindelwelle kann eine sehr hohe Gleichlaufgüte bei einer hohen Regelsteifigkeit sowohl im drehzahlgeregelten Betrieb als auch lagegeregelten Betrieb erreicht werden. Es können jedoch alternativ auch Spindeln mit indirektem Antrieb eingesetzt werden. Diese haben den Vorteil, dass die Wärmeentwicklung durch den Motor nicht unmittelbar auf die Spindelwelle und/oder das Spindelgehäuse wirkt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Prinzipskizze einer erfindungsgemässen Ausführungsform der erfindungsgemässen Verzahnungsbearbeitungsmaschine in Form einer nicht massstäblichen Schnittdarstellung;
- Fig. 2a: eine Schrägansicht der Maschine mit kompletter Verschalung und geöffneter Maschinenhaube;
- Fig. 2b: eine Schrägansicht der Maschine mit kompletter Verschalung und geschlossener Maschinenhaube;
- Fig. 2c: eine Seitenansicht der Maschine mit kompletter Verschalung und geschlossener Maschinenhaube;
- Fig. 3: eine Schrägansicht der Maschine ohne Front- und Rückseitenverschalung;
- Fig. 4: eine Schrägansicht der Maschine mit transparent dargestellten Komponenten;
- Fig. 5: eine Draufsicht der Maschine;
- Fig. 6: eine Schnittansicht der Maschine ohne Front- und Rückseitenverschalung, jedoch mit Maschinenoberteil;
- Fig. 7a: eine Draufsicht auf den Faltenbalg des erfindungsgemässen Ausführungsbeispiels;
- Fig. 7b: eine Schnittansicht des Faltenbalgs des erfindungsgemässen Ausführungsbeispiels;
- Fig. 7c: eine vergrössere Detailansicht aus Fig. 7b;
- Fig. 8a: eine vergrösserte Detailansicht aus Fig. 6, welche die Einbausituation des Faltenbalgs in der Maschine in der Arbeitsposition zeigt und
- Fig. 8b: eine vergrösserte Detailansicht aus Fig. 6, welche die Einbausituation des Faltenbalgs in der Maschine im Zustand der maximalen Ausdehnung zeigt.

Grundsätzlich sind in den Figuren gleiche Teile mit gleichen Bezugszeichen versehen.

### Wege zur Ausführung der Erfindung

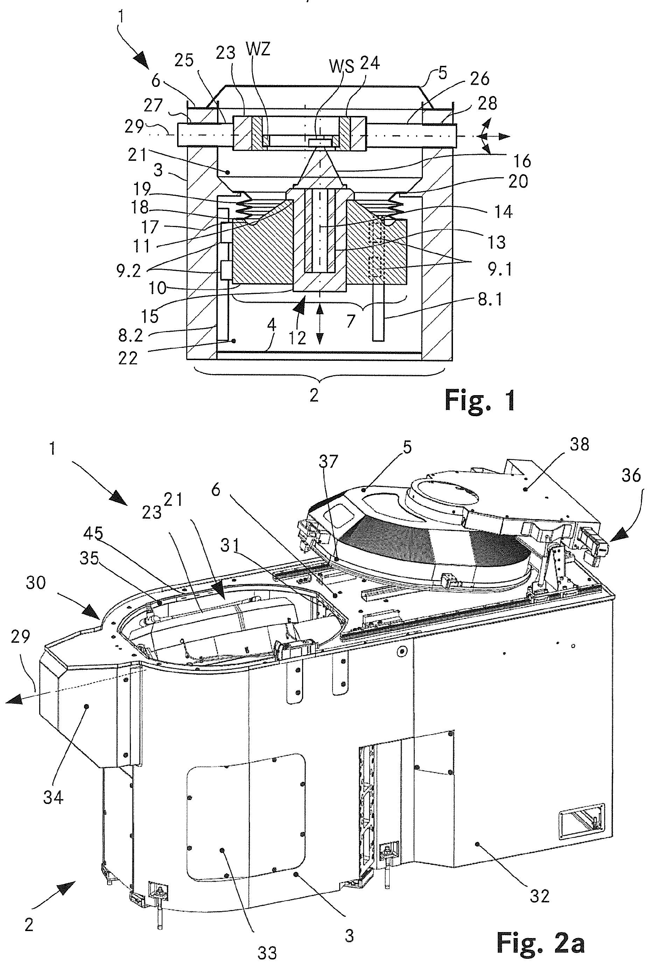

Ein Ausführungsbeispiel einer erfindungsgemässen Verzahnungsbearbeitungsmaschine ist in Form einer Verzahnungshonmaschine in den Figuren 1- 8 dargestellt. Im Folgenden wird die Verzahnungshonmaschine als Honmaschine bezeichnet.

Fig. 1 zeigt eine Prinzipskizze der erfindungsgemässen Honmaschine 1 in Form einer nicht massstäblichen Schnittdarstellung. Die Honmaschine 1 umfasst ein Maschinengestell 2 mit einem Maschinenbett 3 aus vertikalen Wänden, die über einen Umfang einen geschlossenen Mantel bilden. Das Maschinengestell 2 umfasst ferner eine Bodenplatte 4, welche den vom Mantel umschlossenen Raum nach unten abgrenzt sowie eine von Hand betätigbare Maschinenhaube 5, welche im geschlossenen Zustand den vom Mantel umschlossenen Raum nach oben abgrenzt und im Rahmen dieser Anmeldung auch als Deckel bezeichnet wird. Zwischen Maschinenhaube 5 und Maschinenbett 3 ist eine Abtropfwanne 6 angebracht, welche das Öl, das sich beim Be- und Entladen von Werkstücken und Werkzeugen ansammelt, bzw. welches sich während der Honbearbeitung an der unteren Seite Bearbeitungshaube anlagert, einer Honölaufbereitung zuführt.

Im Maschinengestell 2 respektive im Maschinenbett 3 ist ein Spindelschlitten 7 vertikal beweglich über drei Wälzführungen gelagert, die je eine Führungsschiene 8.1, 8.2 und je einen Laufwagen 9.1, 9.2 mit je zwei Rollenwagen umfassen. Die Führungsschienen 8.1, 8.2 sind so am Maschinenbett 3 angebracht, dass sie zueinander jeweils einen Winkel von ca. 120° einschliessen. In Fig. 1 sind auf Grund der Schnittdarstellung nur zwei der drei Wälzführungen sichtbar.

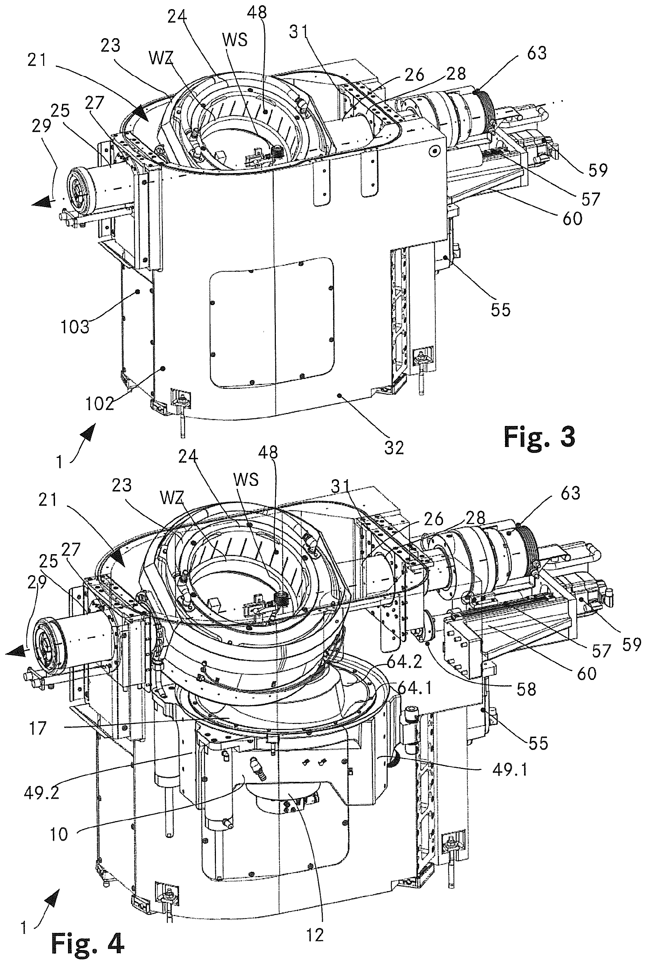

Der Spindelschlitten 7 umfasst ferner einen Spindelträger 10, an welchem die drei Laufwagen 9.1, 9.2, 9.3 an drei in horizontaler Richtung nach aussen zeigenden Befestigungsflächen 49.1, 49.2, 49.3 (siehe Fig. 4) angebracht sind. Die Flächen sind in einem Winkel von jeweils 120° zueinander angeordnet und grenzen mit ihren Mittelpunkten an die Ecken eines imaginären gleichschenkligen Dreiecks an, so dass die in einer zentralen kreisrunden Öffnung 11 in dem Spindelträger 10 befestigte Werkstückspindel 12 in etwa im Schwerpunkt des imaginären Dreiecks liegt. Die Spindelwelle 13 der Werkstückspindel 12 ist um die Werkstückspindelachse 14 drehbar im Werkstückspindelgehäuse 15 gelagert. Das freie Ende der Spindel umfasst ein Spannmittel 16 zur Befestigung des Werkstücks WS mit der zu bearbeitenden Verzahnung. Konzentrisch um die Öffnung 11 respektive zur Werkstückspindelachse 14 fällt der Spindelträger 10 auf seiner vertikal nach oben zeigenden Seite nach aussen hin konusförmig ab. An diesen Abschnitt, der die Form eines hohlen Kegelstumpfs hat, schliesst eine Abflussrinne 17 an, welche die Grundfläche des Kegelstumpfs umgibt. An die Abflussrinne 17 anschliessend, am äusseren Durchmesser des Spindelträgers 10, ist ein Aussenflansch 18 zur Verbindung des Spindelschlittens 7 mit dem unteren Ende eines Faltenbalgs 19 angeordnet.

Ferner hat der Mantel des Maschinenbetts 3 auf der Innenseite einen Vorsprung, an welchem ein Innenflansch 20 angeordnet ist, der wie der Aussenflansch 18 ebenfalls konzentrisch zur Spindelachse 14 verläuft und welcher zur Befestigung des oberen Endes der Faltenbalgs 19 an das Maschinenbett 3 respektive an das Maschinengestell 2 dient.

Das Maschinengestell 2 respektive das Maschinenbett 3, der Spindelschlitten 7 mit dem Spindelträger 10 und der Werkstückspindel 12, der Faltenbalg 19 und die Maschinenhaube 5 grenzen den Arbeitsraum 21 öldicht ab, in welchem das Werkstück bearbeitet wird. Gleichzeitig grenzt der Faltenbalg 19 zusammen mit dem Spindelschlitten 7 den Maschinenraum 22 im unteren Teil des Maschinenbetts 3 vom Arbeitsraum 21 ab. Dieser Raum ist ebenso wie der Raum ausserhalb des Maschinenmantels vom Arbeitsraum 21 abgedichtet und frei von Honöl und Materialabtrag bzw. Spänen. Er ist nach unten hin von der Bodenplatte 4 begrenzt.

Sämtliche sich um Maschinenraum befindlichen Antriebseinrichtungen und Führungen sind folglich in einer sauberen Umgebung und brauchen nicht zusätzlich abgedichtet werden, weshalb Komponenten einer geringeren Schutzklasse verwendet werden können. Der Antrieb des Spindelschlittens 7 ist in Fig. 1 nicht dargestellt und wird weiter unten beschrieben.

Innerhalb des Arbeitsraums 21 ist der Honringträger 23 angeordnet, in welchem das innenverzahnte Honwerkzeug WZ in einer Hohlwelle 24 eingespannt drehbar gelagert ist. Der Honringträger 23 hat eine torusähnliche Form, in welchem ein elektrischer Direktantrieb die Hohlwelle 24 antreibt. Am Aussenmantel des Honringträgers 23 sind diametral gegenüberliegend zwei Stahlrohre 25, 26 befestigt. Die Stahlrohre 25, 26 erstrecken sich beidseitig durch entsprechende Öffnungen mit Gleitbuchsen 27, 28 im Maschinenbett 3 nach aussen. Die Durchmesser der Stahlrohre 25, 26 sind so abgestimmt, dass sie passgenau mit den Gleitbuchsen 27, 28 zusammen wirken. Die Lagerung ist so ausgeführt, dass sich die Stahlrohre 25, 26 und damit der Honringträger 23 entlang der durch die Gleitlager definierten Längsachse 29 gegenüber dem Maschinengestell 2 verdrehen und verschieben lassen. Über diese Längsachse 29 lässt sich das Honwerkzeug WZ in radiale Richtung zum Werkstück WS zustellen und der Achskreuzwinkel zwischen dem Werkstück WS und dem Werkzeug WZ einstellen. Die Längsachse ist folglich gleichzeitig Zustell- und Schwenkachse.

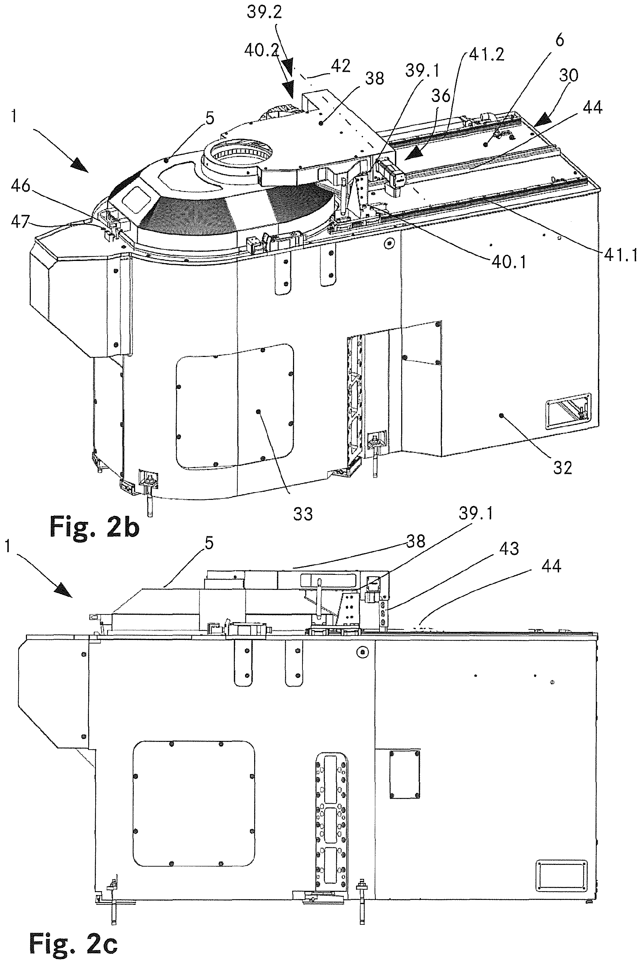

Fig. 2a bis 2c zeigen Ansichten der erfindungsgemässen Honmaschine 1 mit einem komplett verschalten Maschinengestell 2. Fig. 2a zeigt eine Schrägansicht der Honmaschine mit der geöffneten Maschinenhaube 5. Die Fig. 2b zeigt eine Schrägansicht und die Fig. 2c eine Seitenansicht der komplett verschalten Honmaschine mit der geschlossen Maschinenhaube 5.

Das Maschinengestell 2 besitzt neben dem Maschinenbett 3 eine Maschinenverschalung sowie ein Maschinenoberteil 30, in welches eine Abtropfwanne 6 integriert ist.

Die Honmaschine 1 hat einen weitgehend spiegelsymmetrischen Aufbau, wobei die Symmetrieebene durch die Vertikalebene gebildet wird, in welcher die Längs- bzw. die Schwenkachse 29 des Honringträgers 23 liegt (siehe auch Fig. 1).

Der Mantel des Maschinenbetts 3 wird aus vertikal ausgerichteten Wandelementen gleicher Höhe gebildet, welche auf einer im Wesentlichen rechteckigen Grundfläche stehen. Es ist zu beachten, dass die Wandelemente aus einzelnen übereinander oder nebeneinander angeordneten Bauteilen zusammengesetzt sein können.

Die Wandelemente des Maschinenbetts 3 sind vorzugsweise aus Grauguss. Sie könnten jedoch, mindestens teilweise, auch aus Mineralguss, Stahlguss, Polymerbeton oder Granit, oder aus einer Kombination von verschiedenen Materialen zusammengesetzt sein.

Im Horizontalschnitt hat der Mantel des Maschinenbetts 3 gegen die vordere Schmalseite eine abgerundete Form und gegen die hintere Schmalseite eine eher rechteckige Form, welche nach hinten durch eine gerade Rückwand 31 begrenzt ist (siehe auch Fig. 4). An die Längsseiten des Mantels des Maschinenbetts 3 schliesst bündig hinter der Rückwand eine quaderförmige Rückseitenverschalung 32 an, welche Teil der Maschinenverschalung ist.

Zur Maschinenverschalung gehören ferner die Serviceabdeckungen 33, welche jeweils in beiden Längsseiten des Mantels des Maschinenbetts 3 eine rechteckige Aussparung abschliessen. Eine Frontverschalung 34 auf der vorderen Längsseite dient zum Berührschutz gegenüber dem vorderen Stahlrohr 25 der Tragevorrichtung des Honringträgers 23, dessen äusseres Ende bei einer Zustellung des Honringträgers 23 in Richtung Werkstück WS aus dem Mantel des Maschinenbetts 3 hinausbewegt wird, sowie zum Schutz vor Schmutz von aussen.

Ebenso zur Maschinenverschalung gehört die Rückseitenverschalung 32, welche einen U-förmigen Mantel aus Stahlblech besitzt. Das U wird durch zwei über eine Rückwand (verdeckt) verbundene Seitenwände gebildet und ist nach unten durch eine Platte aus Stahlblech abgeschlossen. Die Rückseitenverschalung 32 dient der Abdeckung bzw. Abgrenzung von Maschinenkomponenten welche ausserhalb des Maschinengestells angebracht sind, um diese beispielsweise vor Schmutz zu schützen bzw. um einen Berührschutz zu gewährleisten. Dazu zählen unter anderem der Antrieb für den Spindelschlitten 7 sowie für die Antriebskomponenten der Zustell- und Schwenkachse des Honringträgers 23.

Auf dem Mantel des Maschinenbetts 3 und demjenigen der Rückseitenverschalung 32 ist das Maschinenoberteil 30 angeordnet, welches eine plattenförmige Abtropfwanne 6 sowie die mechanischen Komponenten für die Führung und das Verschliessen der Maschinenhaube 5 umfasst. Die Abtropfwanne 6 schliesst mit einem rechteckigen Teil die Rückseitenverschalung 32 nach oben ab, während sie oberhalb des Maschinenbetts 3 die Wände desselben abdeckt. Gleichzeitig gewährleistet sie über eine grosse ovale Öffnung 35 die Zugänglichkeit des Arbeitsraums 21 von oben.

Um die ovale Öffnung 35 verläuft eine U-förmige Nut 45, in welche die Maschinenhaube 5 mit der vertikalen Unterkante des Haubenrands 37 im geschlossenen Zustand eingreift und durch eine an der Unterkante befestigte umlaufende Gummidichtung öldicht abdichtet.

Die Maschinenhaube 5 kann durch einen kombinierten Schiebe- und Schwenkmechanismus 36 über der Öffnung abgesenkt werden und somit den Arbeitsraum 21 nach oben abschliessen.

Fig. 2b zeigt die Honmaschine mit der geschlossenen Maschinenhaube 5 in einer Schrägansicht, während Fig. 2c die Honmaschine mit geschlossener Maschinenhaube in der Seitenansicht zeigt. Die Maschinenhaube 5 wird auf ihrer Oberseite von einer hebelartig wirkenden Trägerplatte 38 gehalten. Diese ist beidseitig über zwei Drehlager 39.1, 39.2 (39.2 nicht sichtbar) mit den Laufwagen 40.1, 40.2 (40.2 nicht sichtbar) zweier auf den Längsseiten des rechteckigen Abschnitts der Abtropfwanne 6 angeordneten Linearführungen 41.1, 41.2 verbunden. Durch die Drehlager 39.1 und 39.2 wird eine Schwenkachse 42 für die Schwenkvorrichtung definiert, welche quer zur Symmetrieebene der Honmaschine 1 ausgebildet ist. Hinter der Schwenkachse 42, auf der der Maschinenhaube 5 abgewandten Seite, ist ein linear wirkendes Element 43 mit einem Ende über ein Gelenk um die Schwenkachse 42 drehbar mit der Trägerplatte 38 und mit dem anderen Ende mit dem Laufwagen einer mittleren Führungsschiene 44 verbunden. Die mittlere Führungsschiene 44 ist mittig zwischen den beiden Linearführungen 41.1, 41.2 angebracht. Durch eine Verringerung der Länge des linear wirkenden Elements 43 wird die Maschinenhaube 5 angehoben und durch eine Verlängerung derselben abgesenkt. Die Maschinenhaube 5 kann über ein an der Vorderseite angebrachtes Griffelement 46 mit einem Schnapper 47 verriegelt und entriegelt werden (Fig. 2b).

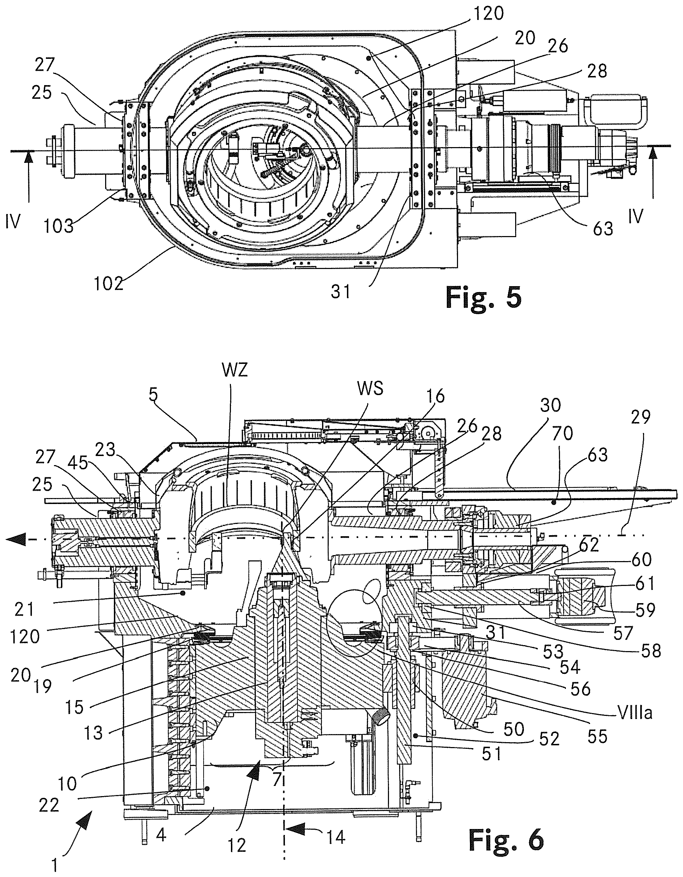

Die Figuren 3 - 5 zeigen die erfindungsgemässe Ausführungsform der Honmaschine ohne Front- und Rückseitenverschalung 34, 32, Maschinenoberteil 30 und Maschinenhaube 5. Fig. 3 zeigt dabei eine Schrägansicht, Fig. 4 ein transparente Ansicht und Fig. 5 eine Draufsicht der Honmaschine 1. In Fig. 6 dagegen, welche die Honmaschine 1 in einer vertikalen Schnittansicht durch die Symmetrieebene zeigt, ist die Honmaschine 1 ohne Frontverschalung 34 und Rückseitenverschalung 32 jedoch mit Maschinenoberteil 30 dargestellt.

Die Figuren 3 - 6 zeigen die Honmaschine 1 mit dem Maschinenbett 3, in welchem der Honringträger 23, entlang der horizontal angeordneten Schwenk- und Zustellachse 29 verschiebbar und gleichzeitig schwenkbar im Arbeitsraum 21 angeordnet ist. Im Honringträger 23 ist eine Hohlwelle 24 drehbar gelagert, welche mit einer Honringaufnahme 48 ausgestattet ist, in welche das Honwerkzeug WZ in Form eines innenverzahnten Honrings eingespannt werden kann.

Der Mantel des Maschinenbetts 3 wird aus vertikal ausgerichteten Wandelementen gebildet, welche einen Innenraum seitlich umschliessen. Nach vorne, in Richtung der Zustellachse 29 des Honringträgers, grenzen zwei im Horizontalschnitt bogenförmige Wandelemente 102 mit einem dazwischenliegenden geraden vorderen Wandelement 103 den Innenraum nach vorne ab, wobei die Wandelemente im Horizontalschnitt die Form eines leicht abgeplatteten Halbkreises bilden. In der direkten Verlängerung der bogenförmigen Wandelemente 102 grenzen drei rechtwinklig zu einem U-angeordneten Wandabschnitte den Innenraum im hinteren Bereich ab. Hierbei sind die äusseren Wandabschnitte in der direkten tangentialen Verlängerung der bogenförmigen Wandsegmente 102 angeordnet. An der Rückwand 31, der hinteren schmalen Längsseite des Maschinenbetts, sind die Antriebselemente der Schwenk- und der Zustellachse des Honringträgers 23 befestigt, ebenso ist dort die Gleitführung 28 für ein Stahlrohr 26 der Tragevorrichtung des Honringträgers 23 angeordnet. Diametral gegenüber, im vorderen Wandelement 103 ist die Gleitführung 27 des anderen Stahlrohrs 25 der Tragevorrichtung des Honringträgers 23 angeordnet.

In Fig. 4 ist der Spindelträger mit den drei um je 120 ° versetzten nach aussen zeigenden Flächen 49.1, 49.2, 49.3 (49.3 nicht sichtbar, da verdeckt) zur Befestigung der Laufwagen 9.1, 9.2 (Fig. 1) dargestellt. In der zur Werkstückachse 14 konzentrischen Abflussrinne 17 sind Abflussöffnungen 64.1, 64.2 angebracht. Die Abflussrinne 17 hat eine gegen die Abflusslöcher 64.1, 64.2 abfallende Steigung. Das durch die Abflusslöcher abgeflossene Honöl wird über Leitungen, welche am Spindelträger 10 angeschlossen sind, einer Honölaufbereitungsanlage zugeführt.

In Fig. 6 ist der vertikale Längsschnitt der Honmaschine 1 durch die Symmetrieebene dargestellt. Sie zeigt den in vertikaler Richtung vom Mantel des Maschinenbetts umgebenen Innenraum der Honmaschine 1, der durch den Faltenbalg 19 und den Spindelschlitten 7 auf etwa mittlerer Höhe des Maschinenbetts 3 in zwei Teilräume unterteilt wird: Einerseits in den Arbeitsraum 21, der oberhalb der nach oben orientierten Aussenkontur des Spindelschlittens 7 und gleichzeitig nicht ausserhalb der Aussenkontur des Faltenbalgs 19 liegt, andererseits in den Maschinenraum 22, der unterhalb der nach oben orientierten Aussenkontur des Spindelschlittens 7 und ausserhalb des Faltenbalgs 19 liegt. Der Maschinenraum 22 wird von unten durch eine Bodenplatte 4 und der Arbeitsraum 21 nach oben durch die geschlossene Maschinenhaube 5 abgegrenzt, welche mit ihrer senkrechten Unterkante am Haubenrand 37 (Fig. 2a) in die U-förmige Nut 45 hineinragt, die um die Öffnung 35 (Fig. 2a) der Abtropfwanne 6 herum angeordnet ist.

Zur Befestigung des Faltenbalgs 19 an der Wandung des Maschinengestells 2 respektive des Maschinenbetts 3 ist auf einem Umfang des Mantels ein Vorsprung 120 angebracht, der von aussen nach innen trichterförmig abfällt und in eine ringförmige kreisrunde Fläche übergeht, die den Innenflansch 20 zur Befestigung des Faltenbalgs 19 an das Maschinenbett bildet. Der Vorsprung 120 ist weitgehend massiv gestaltet, um die Maschinensteifigkeit zu erhöhen. Da der Innenflansch 20 zentrisch zur Werkstückspindelachse 14 und nicht zentrisch in Bezug auf den Mantel des Maschinenbetts 3 angeordnet ist, sondern in Bezug auf die Längsachse 29 der Maschine eher gegen die Rückwand 31 des Maschinenbetts, ragt der Vorsprung 120 im Bereich der Rückwand weniger weit in den durch den Mantel umgebenen Innenraum hinein.

Der Faltenbalg 19 ist auf seiner unteren Seite am Aussenflansch 18 (Fig. 1) des Spindelträgers 10 befestigt.

Die Werkstückspindel 13 ist mit ihrem Spindelgehäuse 15, in der kreisrunden Öffnung des Spindelträgers 10 befestigt. Der Spindelschlitten 7 umfasst neben der Werkstückspindel 12 und dem Spindelträger 10 drei Laufwagen 9.1, 9.2 (Fig. 1) sowie eine feststehende Spindelmutter 50, welche seitlich am Spindelträger 10 angebracht ist. Dieser Spindelschlitten 7 ist entlang der Werkstückachse 14 über eine Kugelumlaufspindel 51 antreibbar, welche mit der feststehenden Spindelmutter 50 interagiert. Für die Kugelumlaufspindel ist in der Rückwand 31, unterhalb des Gleitlagers 28, eine vertikale rechteckige Öffnung 52 vorgesehen, die sich nach unten bis zur Bodenplatte 4 erstreckt. Über der Öffnung ist die Rückwand 31 massig gestaltet und hat eine grosse Wandstärke, so dass sie auf der Unterseite das Festlager 53 der hängend angebrachten Kugelumlaufspindel 51 aufnehmen kann. Diese wird über einen Synchronriemen 54 angetrieben, der auf ein Zahnritzel wirkt, das zwischen dem Gewinde der Kugelumlaufspindel 51 und dem Festlager 53 angeordnet ist. Der Synchronriemen 54 wird von einem herkömmlichen Servomotor 55 angetrieben, der ausserhalb des Mantels des Maschinenbetts 3 angeordnet ist. Er ist über eine horizontal an der Unterkante der vertikalen Öffnung 52 angebrachte Befestigungsplatte 56 am Maschinenbett 3 befestigt. Dadurch, dass der Servomotor 55 ausserhalb des Mantels liegt, kann Platz gespart werden. Zudem wird der Servomotor 55 einfacher zugänglich. Der Spindelschlitten 7 ermöglicht es, Bewegungen in Richtung der Werkstückachse 14 zu realisieren. Das sind einerseits kleine Pendelbewegungen während der Bearbeitung eines Werkstücks WS oder des Abrichtens des Werkzeugs WZ respektive des Honrings oder auch grössere Positionierbewegungen, um eine Position für einen Teilewechsel oder Werkzeugwechsel anzufahren.

Der Honringträger ist über die diametral am Aussenmantel des Honringträger 23 befestigten Stahlrohre 25, 26, welche sich beidseitig durch die seitliche Öffnungen im Maschinenbett mit Gleitbuchsen 27, 28 nach aussen erstrecken, im Maschinenbett 3 entlang der Längsachse 29 dreh- und schwenkbar gelagert. Für die Bewegung des Honringträgers 23 in Längsrichtung ist horizontal in Richtung der Längsachse eine Kugelumlaufspindel 57 angeordnet, die auf der einen Seite über ein vertikal in der Rückwand 31 angebrachtes Festlager 58 drehbar gelagert ist und von einem herkömmlichen Servomotor 59 am Ende der Kugelumlaufspindel 57 angetrieben wird. Der Servomotor 59 ist an der Rückseite eines quaderförmigen Antriebkastens 60 angeflanscht und mit der Kugelumlaufspindel 57 über eine Wellenkupplung 61 verbunden. Der Antriebskasten 60 ist an der Rückseite der Rückwand 31 des Maschinenbetts befestigt. Die Spindelmutter 62 der Kugelumlaufspindel 57 ist fest über eine Mitnehmerscheibe mit dem Gehäuse des Schwenkantriebs 63 des Honringträgers 23 verbunden, dessen Abtriebswelle wiederum mit dem Ende des zweiten Stahlrohrs 26 fest verbunden ist. Um eine Verdrehung des Schwenkantriebgehäuses 63 gegenüber dem Maschinenbett 3 zu verhindern, ist das Schwenkantriebgehäuse 63 über eine Linearführung verbunden, deren Führungsschiene am Antriebskasten 60 befestigt ist (nicht sichtbar). Der Schwenkantrieb bewegt sich mit dem Honringträger 23 bei einer Bewegung entlang der Längsachse 29 mit.

Der Schwenkantrieb umfasst einen Servomotor mit einem spielfreien Robotergetriebe.

Fig. 6 zeigt weiter, dass das Maschinenoberteil 30 mit der integrierten Abtropfwanne 6 eine Winkelverstrebung 70 umfasst, welche die Abtropfwanne am Maschinenbett abstützt.

In den Figuren 3 - 6 befinden sich die Werkstückspindel 15 und die Honringaufnahme 23 in einer Bearbeitungsposition, in welcher der Faltenbalg 19 weitgehend entlastet ist.

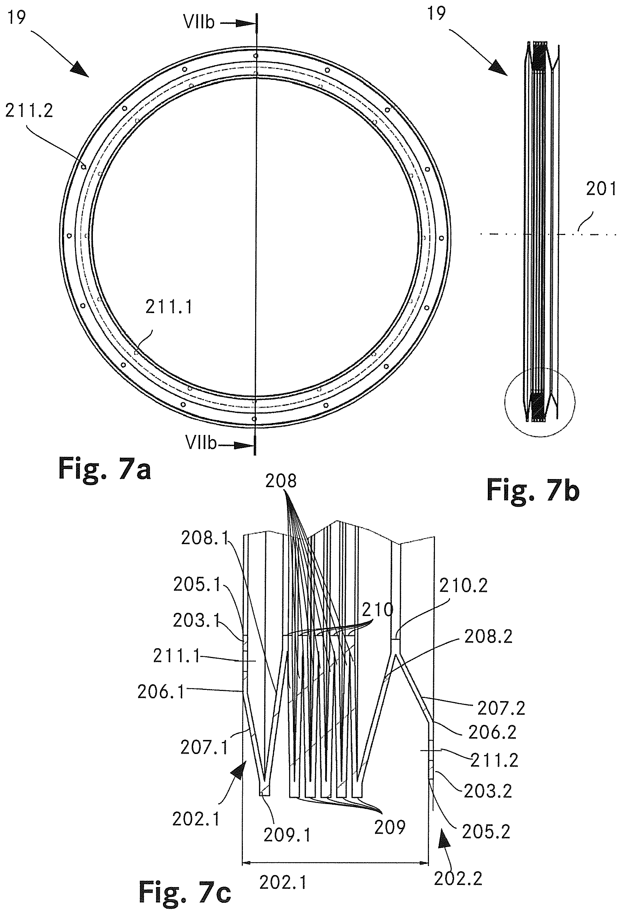

Der Faltenbalg 19 des Ausführungsbeispiels der erfindungsgemässen Honmaschine 1 ist im Detail in den Figuren 7a, 7b und 7c im unverformten bzw. unbelasteten Zustand dargestellt. Der Faltenbalg 19 ist im Wesentlichen konzentrisch zu einer Mittelachse aufgebaut. Fig. 7a zeigt eine Draufsicht in Richtung dieser Mittelachse 201, die Fig. 7b einen diametralen Schnitt durch den Faltenbalg 19 und Fig. 7c einen vergrösserten Ausschnitt aus der Schnittdarstellung der Fig. 7b.

Die Mittelachse 201 des Faltenbalgs 19 fällt dabei mit der Werkstückspindelachse 14 bzw. der ersten Spindelachse der Honmaschine zusammen, in deren Richtung der Faltenbalg 19 relative Bewegungen des Spindelschlittens zum Maschinengestell aufnimmt. Der Faltenbalg 19 ist zu einer Mittelachse 201 rotationssymmetrisch ausgebildet.

Der Faltenbalg ist aus einem Elastomer hergestellt. Für Honmaschinen eignet sich besonders Nitril-Butadien-Kautschuk (NBR), ein synthetischer Kautschuk, welcher eine hohe Beständigkeit gegenüber Mineralölen besitzt und zugleich elastisch und druckverformungsresistent ist. Er ist somit besonderes gegenüber Bearbeitungsflüssigkeiten welche für das Verzahnungshonen verwendet werden resistent, wie beispielsweise Castrol Honilo 980.

An einem ersten äusseren Ende umfasst der Faltenbalg 19 ein erstes Flanschsegment 202.1, welches zur Verbindung des Faltenbalgs 19 mit dem Aussenflansch 18 des Spindelschlittens 7 vorgesehen ist. Am zweiten äusseren Ende weist er ein zweites Flanschsegment 202.2 auf, welches zur Verbindung des Faltenbalgs 19 mit dem Innenflansch 20 des Maschinenbetts 3 dient.

Zwischen den beiden Flanschsegmenten 202.1 und 202.2 bilden gleichförmige flache ringförmige Flankensegmente 208, 208.1, 208.2 die Flanken der Falten des Faltenbalgs 19. Zwei benachbarte Flankensegmente 208, 208.1, 208.2 werden abwechselnd im Bereich ihres äusseren Rands und inneren Rands umlaufend miteinander verbunden, vorzugsweise durch verschweissen. Es sind jedoch auch andere Verbindungsformen möglich, wie beispielsweise Verkleben. Die umlaufenden Verbindungsstellen bilden dabei die äusseren Falze 209 und die inneren Falze 210 des Faltenbalgs 19. In den Falzen ist die Wandstärke des Faltenbalgs etwas grösser, da sich dort die Wandstärke aus der Wandstärke zweier benachbarter Flankensegmente ergibt. Es ist jedoch auch möglich, den Faltenbalg aus einem Stück herzustellen, beispielsweise durch Spritzgiessen.

Das erste Flanschsegment 202.1 besitzt einen ringscheibenförmigen ersten Flanschbereich 203.1, dessen Innendurchmesser durch einen inneren Rand 205.1 des ersten Flanschsegments 202.1 und dessen Aussendurchmesser durch den zentrisch zur Mittelachse 201 umlaufenden ersten Übergang 206.1 bestimmt ist, an welchem das erste Flanschsegment 202.1 vom ringscheibenförmigen ersten Flanschbereich 203.1 in einen ersten konischen Abschnitt 207.1 übergeht. Im ersten Flanschbereich 203.1 ist ein erster Lochkreis 211.1 für die Befestigung des Faltenbalgs am Aussenflansch 18 des Spindelschlittens vorgesehen. Der erste konische Abschnitt 207.1 erstreckt sich vom ersten Übergang 206.1 bis zum äusseren Rand des ersten Flanschsegments 202.1. Dabei beträgt der innere Winkel zwischen dem ringscheibenförmigen Flanschbereich und dem konischen Abschnitt in etwa 80°.

Das erste Flankensegment 208.1 ist mit seinem äusseren Rand mit dem äusseren Rand des ersten Flanschsegments 202.1 in einem ersten äusseren Falz 209.1 verbunden. Beide Segmente schliessen in dieser Verbindungsstelle einen inneren Winkel von etwa 19° ein. Anschliessend folgen in dem Ausführungsbeispiel weitere zehn Flankensegmente 208, 208.2, die abwechselnd im Bereich ihrer benachbarten inneren Ränder jeweils in einem inneren Falz 210, 210.2 oder im Bereich ihrer benachbarten äusseren Ränder jeweils in einem äusseren Falz 209 verbunden sind. Im Querschnitt bilden die so verbundenen Flanschsegmente eine Zickzack-Form, die auch in Fig. 7c ersichtlich ist. Im Ausführungsbeispiel beträgt der innere Winkel zwischen dem ersten Flankensegment 208.1 und dem benachbarten Flankensegment 208 in etwa 9°. Die inneren Winkel in den folgenden sieben Verbindungsstellen bzw. Falzen 209, 210, 210.2 sind kleiner und betragen nur etwa 2°. Die Flankensteigung des zweiten äusseren Flankensegments 208.2, welches in dem letzten inneren Falz 210.2 mit einem zweiten Flanschsegment 202.2 verbunden ist, ist flacher. Mit dem benachbarten Flankensegment 208 ist es in einer äusseren Faltenspitze 209 verbunden und schliesst mit diesem einen Winkel von etwa 16° ein. Das letzte äussere Flankensegment 208.2 ist mit dem zweiten Flanschsegment in einem letzten inneren Falz 210.2 verbunden. Auf dieser Verbindungslinie schliessen die benachbarten Segmente einen inneren Winkel von ca. 30° ein, wobei das Flanschsegment mit dem zweiten konischen Abschnitt 207.2 des zweiten Flanschsegments an das letzte Flankensegment 208.2 angrenzt. Der zweite konische Abschnitt 207.2 des zweiten Flanschsegments 202.2 geht in einem zweiten Übergang 206.2 in einen zweiten (scheibenringförmigen) Flanschabschnitt 203.2 über, dessen Innendurchmesser durch den Übergangsdurchmesser und dessen Aussendurchmesser durch einen äusseren Rand 205.2 des zweiten Flanschabschnitts 202.2 bestimmt ist.

In diesem Ausführungsbeispiel umfasst der Faltenbalg insgesamt zehn Einzelsegmente. Je nach Anwendung kann der Faltenbalg aber auch mehr oder weniger Einzelsegmente aufweisen, je nachdem für welchen Verfahrweg er ausgelegt sein soll. Die Öffnung des Faltenbalgs wird durch die Innendurchmesser der inneren Falze 210, 210.2 sowie durch den Durchmesser des inneren Rands 205.1 des ersten Flanschsegments bestimmt-Letzterer ist jedoch so gewählt, dass er dem Innendurchmesser der inneren Falze 210 entspricht. Lediglich der Durchmesser des letzten inneren Falzes 210.2 ist um knapp zwei Wandstärken grösser. Die Aussendurchmesser der äusseren Falze sind bis auf den Aussendurchmesser des ersten äussern Falzes 209.1 gleich. Dieser ist um einen Bruchteil der Wandstärke kleiner als die Aussendurchmesser der übrigen äusseren Falze 209. Diese Durchmesserdifferenzen zwischen den einzelnen Falzen kompensieren die sich ergebenden Durchmesseränderungen zwischen den einzelnen Segmenten, welche sich beim Auseinanderziehen bzw. Zusammendrücken des Faltenbalgs ergeben, da sich insbesondere die Steigung der äusseren Flanken bei einer Längenänderung des Faltenbalgs weniger stark ändert. Im zweiten Flanschbereich 203.2 ist ein zweiter Lochkreis 211.2 für die Befestigung des Faltenbalgs am Innenflansch 20 des Maschinenbetts vorgesehen.

In dem Ausführungsbeispiel hat der Faltenbalg bei einer Wandstärke von ca. 1.5 mm im unbelasteten Zustand einen Öffnungsdurchmesser von ca. 562 mm, während der Aussendurchmesser ca. 675 mm beträgt. Die Länge des Faltenbalgs in diesem Zustand beträgt ca. 64 mm. Von diesem ausgehend erstreckt sich der Arbeitsbereich von +/- 2 mm. Das maximale Auszugsmass des Faltenbalgs beträgt 228 mm, also bezogen auf den unbelasteten Zustand 164 mm. Das Zusammendrückmass beträgt dagegen 47 mm respektive 17 mm in Bezug auf den unverformten Zustand.

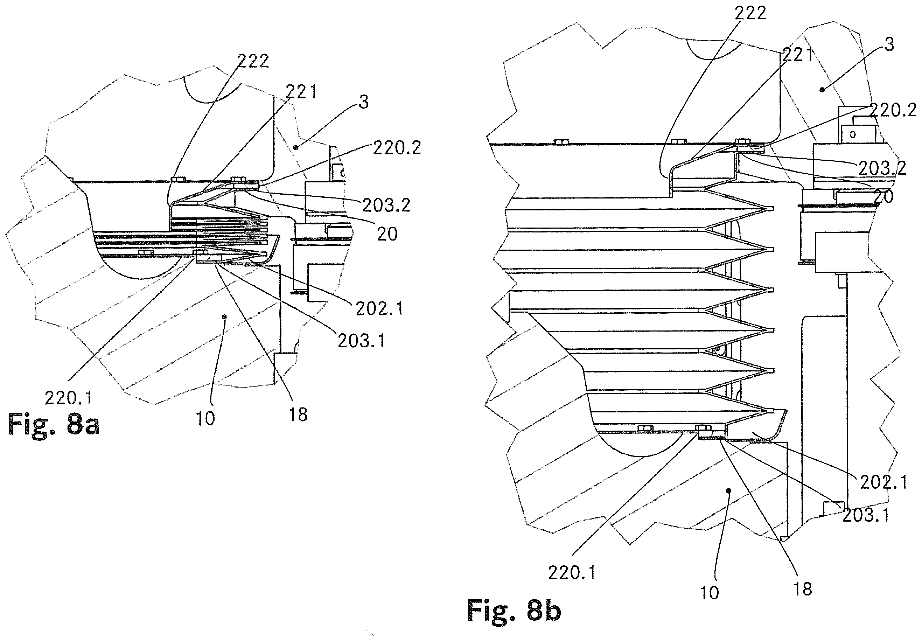

Die Figuren 8a und 8b zeigen einen vergrösserten Teilausschnitt aus der Schnittzeichnung der Fig. 6. Fig. 8a zeigt den Faltenbalg in der Arbeitsposition im praktisch unbelasteten Zustand während Fig. 8b den Faltenbalg im maximal zulässig gedehnten Zustand zeigt.

Der scheibenförmige erste Flanschbereich 203.1 des ersten Flanschsegments 202.1 dient zum Anschluss des Faltenbalges 19 an den Aussenflansch 18 des Spindelschlittens 10. Zur Befestigung wird der Flanschbereich 203.1 zwischen einer hohlzylindrischen Klemmscheibe 220.1 und den Aussenflansch 18 des Spindelträgers 10 geklemmt. Zur Klemmung ist eine Schraubenverbindung zwischen der hohlzylindrischen Klemmscheibe 220.1 und dem Aussenflansch 18 des Spindelträgers 10 vorgesehen, wofür im ersten Flanschbereich 203.1 ein erster Lochkreis 211.1 mit 16 Löchern und einem Lochdurchmesser von 7 mm für M6 Schrauben vorgesehen ist. Entsprechend dient der scheibenförmige zweite Flanschbereich 203.2 des zweiten Flanschsegments 202.2 zur Befestigung des Faltenbalgs 19 an den Innenflansch 20 des Maschinenbetts 3. In dieser Flanschfläche ist ein zweiter Lochkreis 211.2 mit 16 Löchern von ca. 7 mm Lochdurchmesser für M6 Schrauben vorgesehen, um den zweiten Flanschbereich 203.2 über eine Schraubenverbindung zwischen einer ebenfalls hohlzylindrischen Klemmscheibe 220.2 und dem Innenflansch 20 des Maschinenbetts 3 einklemmen zu können. Oberhalb der zweiten hohlzylindrischen Klemmscheibe 220.2 wird noch ein ringförmiges Abtropfblech 221 mit den Schrauben des zweiten Lochkreises 211.2 befestigt, dessen Schürze 222 die Falten des Faltenbalgs in der Arbeitsposition weitgehend vom Honöl abschirmt. Durch die Klemmung zwischen Klemmscheiben 220.1, 220.2 und Flanschen 18, 20 wird eine Abdichtung zwischen dem Spindelträger 10 und dem Faltenbalg 19 bzw. zwischen dem Maschinenbett 3 und dem Faltenbalg 19 bewirkt.

Zusammenfassend ist festzustellen, dass durch die Erfindung eine Vezahnungsbearbeitungsmaschine geschaffen wird, welche bei einem einfachen und platzsparenden Aufbau sehr servicefreundlich ist und einen kostengünstigen Unterhalt ermöglicht.

## Patentansprüche

1. Verzahnungsbearbeitungsmaschine (1), insbesondere eine Verzahnungshartfeinbearbeitungsmaschine, umfassend:
a) ein Maschinengestell (2),
b) einen Spindelschlitten (7) mit einer ersten Spindel (12), welche ein erstes Spindelgehäuse (15) und eine ersten Spindelwelle (13) umfasst, wobei die erste Spindelwelle (13) im ersten Spindelgehäuse (15) um eine erste Spindelachse (14) drehbar angeordnet ist und ein freies Ende (16) zur Aufnahme eines Werkstücks oder eines Werkzeugs (WS) aufweist,
c) eine zweite Spindel mit einem zweiten Spindelgehäuse (23) und einer zweiten Spindelwelle (24), wobei die zweite Spindelwelle (24) im zweiten Spindelgehäuse (23) um eine zweite Spindelachse drehbar zur Aufnahme eines Werkzeugs oder Werkstücks (WZ) angeordnet ist,
d) wobei mindestens eine Wandung (3) des Maschinengestells (2) einen Teil der Hülle eines abschliessbaren Arbeitsraums (21) bildet, in welchem das Werkstück (WS) bearbeitbar ist und welcher abgeschlossen werden kann, um den Austritt eines Materialabtrags, einer Bearbeitungsflüssigkeit und/oder eines Bearbeitungsnebels aus dem Arbeitsraum (21) in andere Maschinenbereiche (22) oder noch aussen zu verhindern,
e) und der Spindelschlitten (7) am Maschinengestell (2) in Richtung der ersten Spindelachse (14) verschiebbar angeordnet ist,
f) und der abschliessbare Arbeitsraum (21) das freie Ende (16) der ersten Spindelwelle (13) und mindestens abschnittsweise die zweite Spindelwelle (24) einschliesst,
**dadurch gekennzeichnet, dass**
g) die Verzahnungsbearbeitungsmaschine (1) einen Balg (19) umfasst, der auf einer ersten Seite fest mit dem Spindelschlitten (7) und auf einer zweiten Seite fest mit der mindestens einen Wandung (3) des Maschinengestells (2) verbunden ist,
h) wobei der Balg (19) den abschliessbaren Arbeitsraum (21) an mindestens einer Stelle so begrenzt, dass ein Teil des Spindelschlittens (7) permanent ausserhalb des Arbeitsraums (21) liegt, und
i) wobei der Balg (19) in der Lage ist, durch ein Ausziehen oder Zusammenziehen eine relative Bewegung in Richtung der ersten Spindelachse (14) zwischen dem Spindelschlitten (7) und dem Maschinengestell (2) aufzunehmen.

2. Verzahnungsbearbeitungsmaschine (1) nach Anspruch 1, wobei der Balg ein Faltenbalg (19) ist.

3. Verzahnungsbearbeitungsmaschine (1) nach einem der Ansprüche 1 oder 2, wobei der Balg (19) auf der ersten Seite eine erste Öffnung (205.1) und auf der zweiten Seite eine zweite Öffnung (205.2) aufweist und dazwischen eine über einen Umfang geschlossene Mantelfläche (208, 208.1, 208.2) und im Bereich einer Kontur der ersten Öffnung (205.1) mit dem Spindelschlitten (7) und im Bereich einer Kontur (205.2) der zweiten Öffnung (205.2) mit mindestens einer Wandung (20) des Maschinengestells (2) verbunden ist, wobei die beiden Konturen (205.1, 205.2) die erste Spindelachse (14) jeweils umschliessen.

4. Verzahnungsbearbeitungsmaschine (1) nach einem der Ansprüche 1 - 3, bei welcher die erste Spindelachse (14) im Wesentlichen vertikal ausgerichtet ist und das freie Ende (16) der ersten Spindelwelle (13) nach oben gerichtet ist.

5. Verzahnungsbearbeitungsmaschine (1) nach einem der Ansprüche 1 - 4, wobei der Arbeitsraum (21) dicht gegen den Austritt von Bearbeitungsflüssigkeit oder Bearbeitungsnebel abschliessbar ist.

6. Verzahnungsbearbeitungsmaschine (1) nach einem der Ansprüche 1 - 5, bei welcher die zweite Spindelwelle (24) als Hohlwelle zur Aufnahme eines ringförmigen Werkzeugs oder eines ringförmigen Werkstücks (WZ) ausgebildet ist.

7. Verzahnungsbearbeitungsmaschine nach einem der Ansprüche 1 - 6, wobei die Verzahnungsbearbeitungsmaschine eine Verzahnungshonmaschine (1) ist.

8. Verzahnungsbearbeitungsmaschine (1) nach einem der Ansprüche 1 - 7, wobei das zweite Spindelgehäuse (23) senkrecht zur ersten (14) und zur zweiten Spindelachse um eine Schwenkachse (29) schwenkbar am Maschinengestell (2) gelagert ist, vorzugsweise an zwei diametral gegenüberliegenden Lagerstellen (27, 28), wobei das zweite Spindelgehäuse (23) zusätzlich entlang einer linearen Achse, die mit der Schwenkachse (29) zusammenfällt, verschiebbar am Maschinengestell (2) gelagert ist.

9. Verzahnungsbearbeitungsmaschine (1) nach einem der Ansprüche 1 - 8, bei welcher der abschliessbare Arbeitsraum (21) die zweite Spindelwelle (24) ganz einschliesst.

10. Verzahnungsbearbeitungsmaschine (1) nach einem der Ansprüche 1 - 9, wobei die Mantelfläche (208, 208.1, 208.2) des Balgs einen runden Querschnitt besitzt und vorzugsweise eine zylindrische Grundform hat.

11. Verzahnungsbearbeitungsmaschine (1) nach einem der Ansprüche 1 - 10, wobei der Balg (19) aus einem Elastomer, vorzugsweise aus Gummi, hergestellt ist.

12. Verzahnungsbearbeitungsmaschine (1) nach einem der Ansprüche 3 - 11, wobei der vom Balg (19) umschlossene Raum zum Arbeitsraum (21) gehört.

13. Verzahnungsbearbeitungsmaschine (1) nach einem der Ansprüche 3 - 12, wobei der Spindelschlitten (7) einen ringförmigen Flansch (18) besitzt, welcher über einen Umfang im Bereich der Kontur der ersten Öffnung (205.1) mit dem Balg (19) flüssigkeitsdicht verbunden ist.

14. Verzahnungsbearbeitungsmaschine (1) nach den Ansprüchen 3 und 13, wobei der Flansch eine ringförmige Wanne (17) mit mindestens einer Abflussöffnung (64.1, 64.2) definiert, durch welche die Bearbeitungsflüssigkeit und die Späne aus dem Arbeitsraum (21) ablaufen können.

15. Verzahnungsbearbeitungsmaschine (1) nach einem der Ansprüche 1 - 14, bei welcher das Maschinengestell (2) derart ausgebildet ist, dass der Arbeitsraum (21) durch einen Deckel (5) nach oben abschliessbar ist.

## Claims

1. A gear processing machine (1), in particular a gear hard finishing machine, comprising:
a) a machine frame (2),
b) a spindle slide (7) having a first spindle (12), which comprises a first spindle housing (15) and a first spindle shaft (13), wherein the first spindle shaft (13) is arranged in the first spindle housing (15) such that it can be rotated around a first spindle axis (14) and has a free end (16) for receiving a workpiece or a tool (WS), and
c) a second spindle having a second spindle housing (23) and a second spindle shaft (24), wherein the second spindle shaft (24) is arranged in the second spindle housing (23) such that it can be rotated around a second spindle axis in order to receive a tool or workpiece,
d) wherein at least one wall (3) of the machine frame (2) forms a part of the shell of a closable working space (21) in which the workpiece (WS) is able to be machined and which can be closed off in order to prevent any removed material, machining liquid and/or machining mist from escaping from the working space (21) into other machine regions (22) or to the outside,
e) and the spindle slide (7) is arranged on the machine frame (2) such that it can be moved in the direction of the first spindle axis (14),
f) and the closable working space (21) encloses the free end (16) of the first spindle shaft (13) and at least partially encloses the second spindle shaft (24),
**characterised in that**
g) the gear processing machine (1) comprises a bellows (19) which is firmly connected to the spindle slide (7) on a first side and to the at least one wall (3) of the machine frame (2) on a second side,
h) wherein the bellows (19) delimits the closable working space (21) in at least one place such that a part of the spindle slide (7) is located permanently outside of the working space (21), and
i) wherein the bellows (19) is capable, by expanding or contracting, of accommodating any relative movement in the direction of the first spindle axis (14) between the spindle slide (7) and the machine frame (2).

2. The gear processing machine (1) according to claim 1, wherein the bellows is a folding bellows (19).

3. The gear processing machine (1) according to one of claims 1 and 2, wherein the bellows (19) has a first opening (205.1) on the first side and a second opening (205.2) on the second side and a peripherally closed lateral surface (208, 208.1, 208.2) in between, and is connected to the spindle slide (7) in the region of a contour of the first opening (205.1) and to at least one wall (20) of the machine frame (2) in the region of a contour (205.2) of the second opening (205.2), wherein the two contours (205.1, 205.2) each surround the first spindle axis (14).

4. The gear processing machine (1) according to one of claims 1 to 3, wherein the first spindle axis (14) is oriented substantially vertically and the free end (16) of the first spindle shaft (13) is directed upwards.

5. The gear processing machine (1) according to one of claims 1 to 4, wherein the working space (21) can be closed tightly to prevent the escape of machining liquid or machining mist.

6. The gear processing machine (1) according to one of claims 1 to 5, wherein the second spindle shaft (24) is designed as a hollow shaft for receiving an annular tool or an annular workpiece (WZ).

7. The gear processing machine according to one of claims 1 to 6, wherein the gear processing machine is a gear honing machine (1).

8. The gear processing machine (1) according to one of claims 1 to 7, wherein the second spindle housing (23) is mounted on the machine frame (2) perpendicular to the first (14) and to the second spindle axis such that it can be swivelled around a swivelling axis (29), preferably at two diametrically opposite bearing positions (27, 28), wherein the second spindle housing (23) is additionally mounted on the machine frame (2) so as to be displaceable along a linear axis which coincides with the swivelling axis (29).

9. The gear processing machine (1) according to one of the claims 1 to 8, wherein the closable working space (21) fully encloses the second spindle shaft (24).

10. The gear processing machine (1) according to one of claims 1 to 9, wherein the lateral surface (208, 208.1, 208.2) of the bellows has a round cross-section and preferably a cylindrical basic shape.

11. The gear processing machine (1) according to one of claims 1 to 10, wherein the bellows (19) is produced from an elastomer, preferably from rubber.

12. The gear processing machine (1) according to one of claims 3 to 11, wherein the space surrounded by the bellows (19) forms part of the working space (21).

13. The gear processing machine (1) according to one of claims 3 to 12, wherein the spindle slide (7) has an annular flange (18) which is connected to the bellows (19) in a liquid-tight manner on its periphery in the region of the contour of the first opening (205.1).

14. The gear processing machine (1) according to claims 3 and 13, wherein the flange defines an annular well (17) with at least one drain opening (64.1, 64.2), through which the machining liquid and the chips can run out of the working space (21).

15. The gear processing machine (1) according to one of claims 1 to 14, wherein the machine frame (2) is designed such that the working space (21) is closable at the top with a cover (5).

## Revendications

1. Machine d'usinage de dentures (1), notamment machine d'usinage de précision de dentures dans des métaux durs, comprenant :
a) un bâti (2),
b) un chariot porte-broche (7) doté d'une première broche (12) comprenant un logement de première broche (15) et un arbre de première broche (13), ledit arbre de première broche (13) étant agencé rotatif sur un axe de première broche (14) dans le logement de première broche (15) et présentant une extrémité libre (16) destinée à recevoir une pièce à usiner ou un outil (WS), et
c) une deuxième broche comportant un logement de deuxième broche (23) et un arbre de deuxième broche (24), ledit arbre de deuxième broche (24) étant agencé rotatif sur un axe de deuxième broche dans le logement de deuxième broche (23) pour recevoir un outil ou une pièce à usiner (WZ) ;
d) dans laquelle machine au moins une paroi (3) du bâti (2) forme une partie du corps d'un espace de travail (21) susceptible d'être fermé, dans lequel la pièce à usiner (WS) peut être usinée et dont l'aptitude à être fermé permet d'empêcher que du matériau enlevé, du fluide d'usinage et/ou du brouillard d'usinage ne s'échappent hors de l'espace de travail (21) pour atteindre d'autres zones (22) de la machine, voire l'extérieur,
e) et le chariot porte-broche (7) est agencé en translation sur le bâti (2) dans le sens de l'axe de première broche (14),
f) et l'espace de travail (21) susceptible d'être fermé renferme l'extrémité libre (16) de l'arbre de première broche (13) et au moins une partie de l'arbre de deuxième broche (24),
**caractérisée en ce que**
g) la machine d'usinage de dentures (1) comprend un soufflet (19) fixé au chariot porte-broche (7) sur un premier côté et fixé à au moins une paroi (3) du bâti (2) sur un deuxième côté ;
h) ledit soufflet (19), en au moins un endroit, délimitant l'espace de travail (21) susceptible d'être fermé de manière qu'une partie du chariot porte-broche (7) se trouve constamment en dehors de l'espace de travail (21), et
i) ledit soufflet (19) étant apte, par étirement ou par contraction, à suivre un mouvement relatif dans le sens de l'axe de première broche (14) entre le chariot porte-broche (7) et le bâti (2).

2. Machine d'usinage de dentures (1) selon la revendication 1, dans laquelle le soufflet est un soufflet à plis (19).

3. Machine d'usinage de dentures (1) selon l'une des revendications 1 et 2, dans laquelle le soufflet (19) présente une première ouverture (205.1) sur le premier côté et une deuxième ouverture (205.2) sur le deuxième côté et, entre ces côtés, une surface d'enveloppe (208, 208.1, 208.2) fermée sur sa périphérie, et est relié au chariot porte-broche (7) à proximité d'un contour de la première ouverture (205.1) et à au moins une paroi (20) du bâti (2) à proximité d'un contour (205.2) de la deuxième ouverture (205.2), lesdits deux contours (205.1, 205.2) entourant chacun l'axe de première broche (14).

4. Machine d'usinage de dentures (1) selon l'une des revendications 1 à 3, dans laquelle l'axe de première broche (14) est orienté de manière sensiblement verticale et l'extrémité libre (16) de l'arbre de première broche (13) est dirigée vers le haut.

5. Machine d'usinage de dentures (1) selon l'une des revendications 1 à 4, dans laquelle l'espace de travail (21) est susceptible être hermétiquement fermé pour empêcher l'échappement de fluide d'usinage ou de brouillage d'usinage.

6. Machine d'usinage de dentures (1) selon l'une des revendications 1 à 5, dans laquelle l'arbre de deuxième broche (24) est conçu sous forme d'un arbre creux destiné à recevoir un outil annulaire ou une pièce à usiner (WZ) annulaire.

7. Machine d'usinage de dentures selon l'une des revendications 1 à 6, dans laquelle la machine d'usinage de dentures est une machine de rodage de dentures (1).

8. Machine d'usinage de dentures (1) selon l'une des revendications 1 à 7, dans laquelle le logement de deuxième broche (23) est supporté sur le bâti (2), de préférence en deux points de support (27, 28) diamétralement opposés, perpendiculairement à l'axe de première broche (14) et à l'axe de deuxième broche, en étant apte à pivoter sur un axe de pivotement (29), ledit logement de deuxième broche (23) étant en outre supporté sur le bâti (2) en étant coulissant le long d'un axe linéaire coïncidant avec l'axe de pivotement (29).

9. Machine d'usinage de dentures (1) selon l'une des revendications 1 à 8, dans laquelle l'espace de travail (21) susceptible d'être fermé renferme totalement l'arbre de deuxième broche (24).

10. Machine d'usinage de dentures (1) selon l'une des revendications 1 à 9, dans laquelle la surface d'enveloppe (208, 208.1, 208.2) du soufflet possède une section transversale ronde et présente de préférence une forme de base cylindrique.

11. Machine d'usinage de dentures (1) selon l'une des revendications 1 à 10, dans laquelle le soufflet (19) est réalisé en élastomère, de préférence en caoutchouc,

12. Machine d'usinage de dentures (1) selon l'une des revendications 3 à 11, dans laquelle l'espace entouré par le soufflet (19) appartient à l'espace de travail (21).

13. Machine d'usinage de dentures (1) selon l'une des revendications 3 à 12, dans laquelle le chariot porte-broche (7) possède une bride annulaire (18) qui, sur sa périphérie, à proximité du contour de la première ouverture (205.1), est reliée au soufflet (19) de manière étanche aux fluides.

14. Machine d'usinage de dentures (1) selon les revendications 3 et 13, dans laquelle la bride définit une cuvette annulaire (17) possédant au moins une ouverture d'évacuation (64.1, 64.2) par laquelle le fluide d'usinage et les copeaux peuvent quitter l'espace de travail (21).

15. Machine d'usinage de dentures (1) selon l'une des revendications 1 à 14, dans laquelle le bâti (2) est conçu de manière que l'espace de travail (21) est susceptible d'être fermé par un couvercle (5) sur le haut.
